# EUROPÄISCHE PATENTANMELDUNG

(11) **EP 0 969 659 A2**
(43) Veröffentlichungstag der Anmeldung: **05.01.2000**
(21) Anmeldenummer: 99201945.5
(22) Anmeldetag: 18.06.1999
(51) Int. Cl.: H04N 5/262

(54) **Trick- und Mischanordnung**

(30) Priorität: 25.06.1998 DE 19828197
(71) Anmelder: Philips Patentverwaltung GmbH, 22335 Hamburg (DE); Koninklijke Philips Electronics N.V., 5621 BA Eindhoven (NL)
(72) Erfinder: Jung, Frank, Röntgenstrasse 24, 22335 Hamburg (DE)
(74) Vertreter: Peters, Carl Heinrich, Dipl.-Ing.

(57) **Zusammenfassung**

Bei einer Trick- und Mischanordnung für Videosignale mit wenigstens einem Mischer (1,2; 11,12), wenigstens einem diesem nachgeschalteten Ausgangsmischer (3; 13) und wenigstens einem Trick-Generator (5; 14,15), ist zum möglichst flexiblen Einsatz der Trick-Generatoren und gegebenenfalls zur Einsparung von Trick-Generatoren vorgesehen, daß die Trick- und Mischanordnung wenigstens einen Trick-Generator (5,14,15) aufweist, der wenigstens zweien der vorgesehenen Mischer (1,2; 11,12) und Ausgangsmischer (3; 13) alternativ zuordbar ist, wobei die von dem Trick-Generator (5; 14,15) erzeugten Trick-Steuersignale mittels einer Schaltanordnung (6; 16) dem jeweils dem Trick-Generator (5; 14,15) aktuell zugeordneten Mischer (1,2; 11,12) oder Ausgangsmischer (3; 13) zugeführt werden.

## Beschreibung

Die Erfindung betrifft eine Trick- und Mischanordnung für Videosignale mit wenigstens einem Mischer und/oder wenigstens einem diesem nachgeschalteten Ausgangsmischer und wenigstens einem Trick-Generator.

Bei derartigen bekannten Trick- und Mischanordnungen ist im allgemeinen jedem Mischer ein Trick-Generator fest zugeordnet, d.h. der Trick-Generator kann nur den ihm zugeordneten Mischer mit Steuersignalen für Trick-Effekte beliefern. Bei derartigen bekannten Anordnungen haben die Ausgangsmischer entweder gar keinen Trick-Generator oder einen ebenfalls fest zugeordneten.

Aus der US 5,684,543 ist ein Videosignal-Konverter bekannt, der mit Mischern arbeitet. Dabei ist ein gemeinsamer Trick-Generator fest mehreren Mischern zugeordnet. Es können also die Mischer nur gemeinsam mit einem Steuersignal des Trick-Generators beliefert werden.

Demgegenüber ist es Aufgabe der Erfindung, die Anordnung der eingangs genannten Art dahingehend weiterzuentwickeln, daß ein flexiblerer Einsatz der Trick-Generatoren möglich ist und/oder daß Trick-Generatoren eingespart werden können.

Diese Aufgabe ist erfindungsgemäß dadurch gelöst, daß wenigstens ein Trick-Generator vorgesehen ist, der wenigstens zweien der vorgesehenen Mischer und/oder Ausgangsmischer alternativ zuordbar ist, wobei die von dem Trick-Generator erzeugten Trick-Steuersignale mittels einer Schaltanordnung dem jeweils dem Trick-Generator aktuell zugeordneten Mischer oder Ausgangsmischer zugeführt werden.

Im allgemeinen sind in einer derartigen Anordnung mehrere Mischer vorgesehen. Die Ausgangssignale der Mischer werden aufeinen Ausgangsmischer geführt, der schließlich das Ausgangssignal und gegebenenfalls ein sogenanntes Preview-Signal liefert.

Erfindungsgemäß ist nun wenigstens ein Trick-Generator vorgesehen, der auf verschiedene Mischer schaltbar ist. Dies bedeutet, daß der Trick-Generator Trick-Steuersignale alternativ für jeweils einen dieser Mischer liefern kann. Dabei kann es sich auch um den Ausgangsmischer handeln.

Dies hat den Vorteil, daß im Extremfall für mehrere Mischer und Ausgangsmischer ein Trick-Generator vorzusehen ist, der je nach Bedarf einen dieser Mischer mit Trick-Steuersignalen beliefern kann. Dadurch werden mehrere Trick-Generatoren eingespart, die relativ kostenaufwendig sind. Es kann also ein beliebiger Mischer oder auch der Ausgangsmischer für Trick-Effekte eingesetzt werden, ohne daß diesem Mischer ein Trick-Generator fest zugeordnet sein muß. Auch besteht dadurch die Möglichkeit, einen Trick-Generator für den Ausgangsmischer einzusetzen. Der räumliche Platzbedarf in Mischern ist oft relativ knapp, so daß die Einsparung von Trick-Generatoren, die relativ großen Platzbedarf haben, vorteilhaft ist.

Bei einer vorteilhaften Ausgestaltung der Erfindung gemäß Anspruch 2 geschieht die Zuordnung eines Trick-Generators zu einem Mischer oder Ausgangsmischer mittels eines elektronischen Schalters, der als Schaltanordnung fungiert. Mittels dieses Schalters werden die Trick-Steuersignale an den gewünschten Mischer geleitet. Auf diese relativ einfache Weise ist ein Trick-Generator bzw. dessen Steuersignale alternativ mehreren Mischern bzw. Ausgangsmischern zuordbar und kann diese mit entsprechenden Trick-Effekten beliefern.

Bei einer weiteren Ausgestaltung der Erfindung gemäß Anspruch 3 ist eine Steuersignal-Kreuzschiene vorgesehen, welche eine freie Zuordnung eines oder mehrerer Trick-Generatoren auf beispielsweise sämtliche in der Anordnung vorgesehene Mischer bzw. Ausgangsmischer gestattet. Damit ist eine freie Zuordbarkeit jedes Trick-Generators zu einem gewünschten Mischer möglich.

Nachfolgend werden zwei Ausführungsbeispiele der Erfindung anhand der Zeichnung naher erläutert. Es zeigen:
Fig. 1 ein erstes Ausführungsbeispiel, bei dem als Schaltanordnung ein Schalter eingesetzt wird, und
Fig. 2 ein zweites Ausführungsbeispiel der Erfindung, bei dem als Schaltanordnung eine Steuersignal-Kreuzschiene eingesetzt wird.

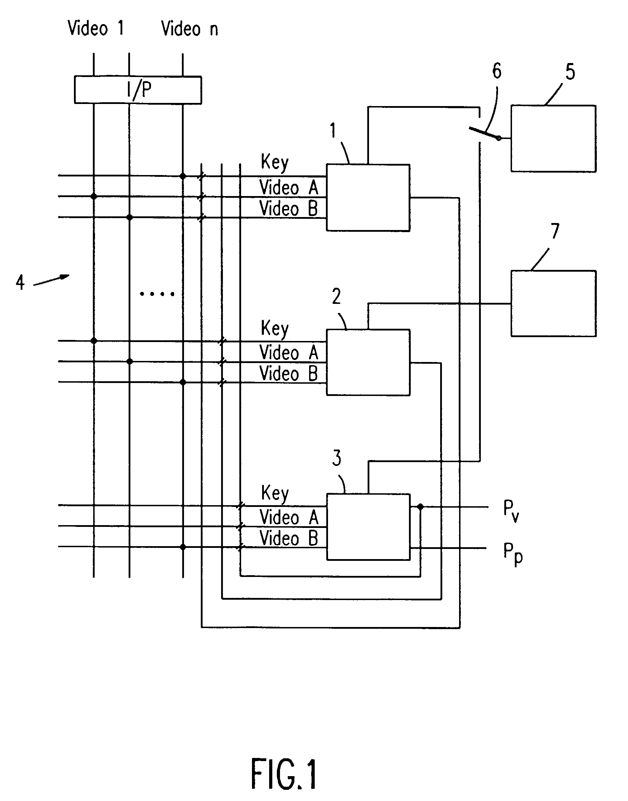

Fig. 1 zeigt ein schematisches Blockschaltbild einer ersten Ausführungsform der erfindungsgemäßen Trick- und Mischanordnung.

Die Anordnung weist einen ersten Video-Mischer 1 und einen zweiten Mischer 2 auf. Es ist ferner ein Augangsmischer 3 vorgesehen, welchem über eine Video-Kreuzschiene 4, ebenso wie den Mischern 1 und 2, verschiedene Videosignale, die in der Figur mit Video 1 bis Video n gekennzeichnet sind, zuführbar sind. Über die Video-Kreuzschiene 4 ist jedem der Mischer ein Signal Video A, ein Signal Video B und ein dazugehöriges Key-Signal zuführbar. Das Key-Signal wird für Stanz-Effekte oder für Überblend-Effekte benötigt.

Darüber hinaus sind die Ausgangssignale der Mischer 1 und 2 ebenfalls über die Video-Kreuzschiene 4 dem Ausgangsmischer 3 zuführbar. Auch kann die Kreuzschiene so ausgelegt sein, daß die Ausgangssignale der Mischer 1, 2 und 3 den jeweils anderen Mischern zuführbar sind.

Im allgemeinen wird der Mischer 3 dazu eingesetzt, die mittels der Mischer 1 und 2 bearbeiteten Signale als Ausgangssignale zur Verfügung zu stellen. Dazu liefen der Ausgangsmischer 3 das Ausgangs-Videosignal Pᵥ. Darüber hinaus liefen der Ausgangsmischer 3 ein sogenanntes Preview-Signal, das in der Figur mit Pₚ bezeichnet ist und das eine Art Vorschau liefert.

Bei bekannten derartigen Trick- und Mischanordnungen ist im allgemeinen jedem der Mischer 1 und 2 ein Trick-Generator fest zugeordnet. Diese feste Zuordnung wird erfindungsgemäß ersetzt durch eine variable Zuordnung.

In dem ersten Ausführungsbeispiel gemäß Fig. 1 ist einem der Mischer 2 ein Trick-Generator 7 fest zugeordnet.

Es ist ein weiterer Trick-Generator 5 vorgesehen, der alternativ sowohl dem Mischer 1 wie auch dem Ausgangsmischer 3 zuordbar ist. Dazu ist eine Schaltanordnung 6 vorgesehen, mittels derer die von dem Trick-Generator 5 gelieferten Trick-Steuersignale entweder dem Mischer 1 oder dem Ausgangsmischer 3 zuführbar sind.

Somit kann entweder der Mischer 1 oder der Ausgangsmischer 3 mit Trick-Steuersignalen beliefen werden. Hierdurch entsteht der Vorteil, daß einerseits ein Trick-Effekt-Generator eingespart wird und daß außerdem auch der Ausgangsmischer 3 mit Trick-Effekten beliefert werden kann.

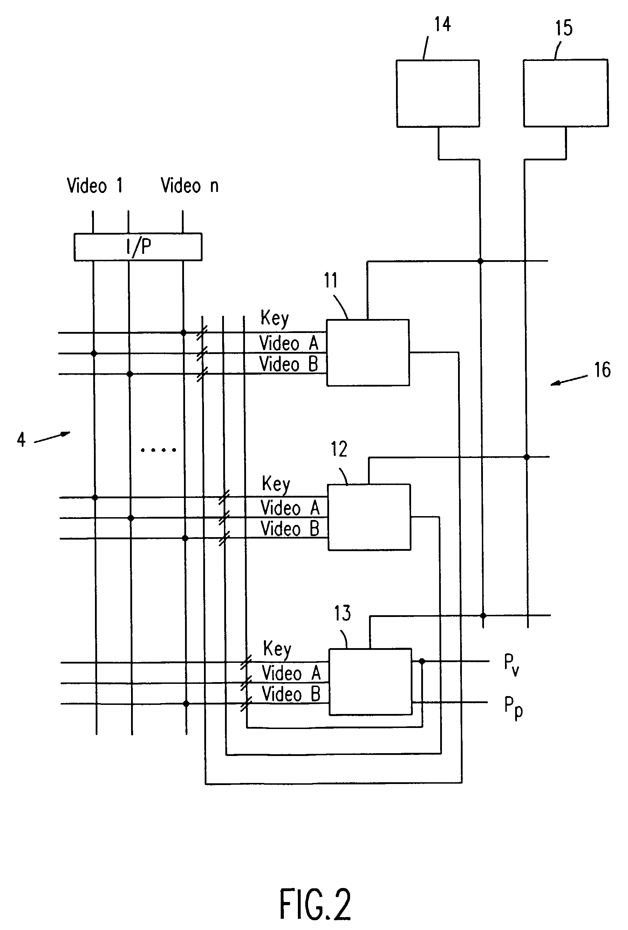

Eine noch variablere Zuordnung von Trick-Generatoren zeigt das zweite Ausführungsbeispiel der Erfindung, das in Fig. 2 ebenfalls in Form eines schematischen Blockschaltbildes dargestellt ist.

Die Fig. 2 zeigt einen ersten Mischer 11, einen zweiten Mischer 12 sowie einen Ausgangsmischer 13, die grundsätzlich entsprechend den Mischern 1, 2 und 3 gemäß des ersten Ausführungsbeispiels verschaltet sind und über eine Video-Kreuzschiene 4 mit Videosignalen und Key-Signalen beliefert werden.

In dem zweiten Ausführungsbeispiel gemäß Fig. 2 sind zwei Trick-Generatoren 14 und 15 vorgesehen, die jeweils jedem der Mischer 11, 12 und 13 frei zuordbar sind. Dazu ist eine Steuersignal-Kreuzschiene 16 vorgesehen, welche die Steuersignale der Trick-Generatoren 14 und 15 auf den jeweils gewünschten Mischer 11 oder 12 bzw. Ausgangsmischer 13 führt. Insbesondere in dem Falle, daß noch mehr Mischer vorgesehen sind als in der Figur angedeutet, tritt ein deutlicher Effekt der Einsparung von Trick-Generatoren ein, da deutlich weniger Trick-Generatoren als Mischer vorgesehen sein müssen, da die Trick-Generatoren je nach Bedarf frei zuordbar den Mischern zuschaltbar sind und so bei Bedarf einen Mischer mit Trick-Steuersignalen beliefern können. Auch könnten bei dieser Konstellation spezialisierte Trick-Generatoren eingesetzt werden, die jeweils individuelle spezielle Trick-Effekte generieren können, da diese Generatoren über die Steuersignal-Kreuzschiene 16 je nach Bedarf jeweils dem Mischer zuordbar sind, in dem der gewünschte Trick-Effekt ausgeführt werden soll.

## Patentansprüche

1. Trick- und Mischanordnung für Videosignale mit wenigstens einem Mischer (1,2; 11,12) und/oder wenigstens einem diesem nachgeschalteten Ausgangsmischer (3; 13) und wenigstens einem Trick-Generator (5; 14,15),
dadurch gekennzeichnet,
daß wenigstens ein Trick-Generator (5; 14,15) vorgesehen ist, der wenigstens zweien der vorgesehenen Mischer (1,2; 11,12) und/oder Ausgangsmischer (3; 13) alternativ zuordbar ist, wobei die von dem Trick-Generator (5; 14,15) erzeugten Trick-Steuersignale mittels einer Schaltanordnung (6; 16) dem jeweils dem Trick-Generator (5; 14,15) aktuell zugeordneten Mischer (1,2; 11,12) oder Ausgangsmischer (3; 13) zugeführt werden.

2. Anordnung nach Anspruch 1, dadurch gekennzeichnet, daß als Schaltanordnung ein elektronischer Schalter (6) vorgesehen ist, mittels welchem die Trick-Steuersignale eines Trick-Generators (5) alternativ wenigstens zwei Mischern (1) und/oder Ausgangsmischern (3) zuführbar sind.

3. Anordnung nach Anspruch 1, dadurch gekennzeichnet, daß als Schaltanordnung eine Steuersignal-Kreuzschiene (16) vorgesehen ist, mittels welcher die Trick-Steuersignale mehrerer Trick-Generatoren (14,15) wählbaren Mischern (11,12) und/oder Ausgangsmischern (13) zuführbar sind.

4. Anordnung nach Anspruch 1, dadurch gekennzeichnet, daß mehrere der Anordnung zugeführte Videosignale mittels einer Kreuzschiene (4) für Videosignale auf die Mischer (1,2; 11,12) schaltbar sind.
